# EUROPÄISCHE PATENTSCHRIFT

(11) **EP 0 936 442 B1**
(45) Veröffentlichungstag und Bekanntmachung des Hinweises auf die Patenterteilung: **02.05.2003**
(21) Anmeldenummer: 99100998.6
(22) Anmeldetag: 21.01.1999
(51) Int. Cl.: G01D 3/08, G01D 18/00

(54) **Verfahren zum Konfigurieren von Sensoren**
Sensor configuration method
Méthode de configuration de capteurs

(30) Priorität: 12.02.1998 DE 19805606
(43) Veröffentlichungstag der Anmeldung: 18.08.1999
(73) Patentinhaber: Schmersal-EOT GmbH & Co. KG, 79108 Freiburg (DE)
(72) Erfinder: Jakob, Hermann, 79297 Winden (DE); Wanner, Theodor, Dr., 79183 Waldkirch (DE)
(74) Vertreter: Sparing - Röhl - Henseler Patentanwälte

(56) Entgegenhaltungen:
- US-A- 4 737 770
- US-A- 4 772 876
- US-A- 5 408 217

## Beschreibung

Die Erfindung betrifft ein Verfahren zum Konfigurieren von Sensoren nach dem Oberbegriff des Anspruchs 1.

Sensoren dienen zur Aufnahme von Meßgrößen (z.B. von elektromagnetischer Strahlung) und zu deren Umwandlung in elektrische Signale. Ihre Anwendungen reichen bis hin zu komplexen Systemen und Anlagen, wobei oft eine Vielzahl von Sensoren eingesetzt wird. Die von den Sensoren gelieferten Daten und Signale werden elektronisch weiterverarbeitet. Da somit die an jeden Sensor angeschlossene Peripherie sowie seine Aufgabenstellung variieren kann, ist es erforderlich, den Sensor in Bezug auf die jeweilige Peripherie zu konfigurieren. Bei den Sensoren kann es sich beispielsweise um Scanner handeln.

Hierbei kann es sinnvoll sein, eine bereits bestehende Konfiguration eines Sensors auf einen anderen Sensor zu übertragen. Eine solche Übertragung der Konfiguration eines Ausgangssensors in einen zu konfigurierenden Sensor wird beispielsweise dann vorgenommen, wenn der Ausgangssensor defekt ist und daher ausgetauscht werden muß, oder wenn seine Konfiguration zur Übertragung in andere Sensoren dupliziert werden soll.

Es ist bekannt, die Konfiguration eines Ausgangssensors in einen zu konfigurierenden Sensor mittels eines Personalcomputers zu übertragen. Hierbei werden zunächst Konfigurationsdaten, die die zu übertragende Konfiguration des Ausgangssensors enthalten, auf einem Datenträger gespeichert. Der Personalcomputer liest diese Konfigurationsdaten anschließend ein und sendet sie an den zu konfigurierenden Sensor. Personalcomputer werden jedoch in solchen Applikationen als "unsicher" eingestuft. Wenn daher der zu konfigurierende Sensor in sicherheitskritischen Applikationen eingesetzt werden soll, muß jeder Parameter vom Anwender einzeln bestätigt werden, um eine mögliche Verfälschung der Konfigurationsdaten zu erkennen. Hierdurch wird das Verfahren sehr zeitaufwendig.

Aufgabe der Erfindung ist es, ein Verfahren zum Konfigurieren von Sensoren nach dem Oberbegriff des Anspruchs 1 zu schaffen, bei dem kein Personalcomputer benötigt wird und eine Bestätigung der Konfigurationsdaten durch den Anwender nicht erforderlich ist.

Diese Aufgabe wird entsprechend dem kennzeichnenden Teil des Anspruchs 1 gelöst.

Hierbei werden Konfigurationsdaten von einem Ausgangssensor an einen zu konfigurierenden Sensor mittels eines Speichermoduls übertragen, wobei eine Verfälschung von Daten über einen Vergleich von Kontrollsummen, um die die Daten erweitert werden, erkennbar ist.

Weitere Ausgestaltungen der Erfindung sind der nachfolgenden Beschreibung und den Unteransprüchen zu entnehmen.

Die Erfindung wird nachstehend anhand eines Flußdiagramms näher erläutert.

Zu Beginn des dargestellten Verfahrens wird ein Speichermodul mit einem Ausgangssensor verbunden. Dies kann sowohl im nicht-konfigurierten Zustand des Ausgangssensors, etwa bei seiner Inbetriebnahme, als auch im konfigurierten Zustand, also zu einem späteren Zeitpunkt, erfolgen.

Vorzugsweise ist der Speichermodul von außen in den Ausgangssensor einsetzbar, so daß dieser zum Einsetzen des Speichermoduls nicht geöffnet werden muß.

Solange der Speichermodul mit dem Ausgangssensor verbunden ist, können sämtliche Konfigurationsdaten im Speichermodul abgespeichert werden, die die aktuelle Konfiguration des Sensors enthalten. Die Konfigurationsdaten werden dabei innerhalb des Speichermoduls durch eine Kontrollsumme (z.B. 16-Bit CRC Summe) erweitert, die dazu dient, beim späteren Lesen der Konfigurationsdaten aus dem Speichermodul eine mögliche Verfälschung der Konfigurationsdaten erkennbar zu machen.

Anschließend wird der Speichermodul mit einem zu konfigurierenden Sensor verbunden. Das Einsetzen des Speichermoduls ist ebenfalls vorzugsweise von außen, d. h. ohne öffnen des zu konfigurierenden Sensors, durchführbar. Anschließend werden sämtliche im Speichermodul gespeicherten Daten, d.h. die Konfigurationsdaten sowie die Kontrollsumme, in den zu konfigurierenden Sensor eingelesen. Vorzugsweise werden die im Speichermodul gespeicherten Daten in den zu konfigurierenden Sensor automatisch nach dessen Einschalten eingelesen. Hierbei wird die den eingelesenen Daten entsprechende Kontrollsumme neu berechnet, wobei die Berechnung auf die gleiche Weise wie bei der im Speichermodul abgelegten Kontrollsumme erfolgt.

Die neu berechnete Kontrollsumme wird daraufhin mit der im Speichermodul gespeicherten verglichen. Wenn eine Verfälschung der vom zu konfigurierenden Sensor gelesenen Konfigurationsdaten vorliegt, stellt der Sensor fest, daß die gespeicherte Kontrollsumme mit der neu berechneten nicht übereinstimmt, woraufhin eine Fehlermeldung erzeugt wird. Die Fehlermeldung bewirkt ein Inaktivieren der Ausgänge des Sensors, so daß eine an den Sensor angeschlossene Maschine nicht anlaufen kann.

Dadurch sind die um eine Kontrollsumme erweiterten Konfigurationsdaten als "sicher" einzustufen. Eine Bestätigung vom Anwender etwa beim Lesen der Konfigurationsdaten durch den zu konfigurierenden Sensor ist daher nicht notwendig, so daß der Anwender nicht aktiv in den Sicherheitsablauf eingebunden wird.

Zu den Anwendungsgebieten des Verfahrens gehört insbesondere auch das Konfigurieren von Sensoren, die auf Basis elektromagnetischer Strahlung arbeiten. Solche Sensoren sind beispielsweise einsetzbar, um die An- oder Abwesenheit eines Objektes in einem zu überwachenden Raumbereich festzustellen.

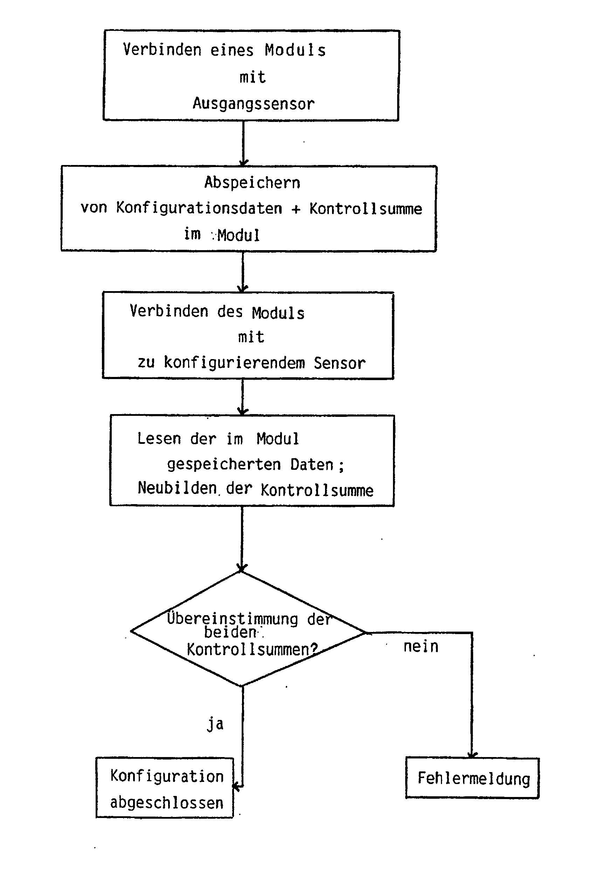

## Patentansprüche

1. Verfahren zum Konfigurieren von Sensoren, wobei Konfigurationsdaten, die eine bestehende Konfiguration eines Sensors enthalten, von einem Ausgangssensor in einen zu konfigurierenden Sensor übertragen werden, **dadurch gekennzeichnet, daß** der Ausgangssensor im konfigurierten Zustand mit einem Speicher modul verbunden wird, welcher die aktuellen Konfigurationsdaten des Ausgangssensors sowie eine den Konfigurationsdaten entsprechende Kontrollsumme im Speicher modul abspeichert, der Speicher modul anschließend mit dem zu konfigurierenden Sensor verbunden wird, die im Speicher modul gespeicherten Daten, d.h. die Konfigurationsdaten sowie die Kontrollsumme in den zu konfigurierenden Sensor eingelesen werden und eine den eingelesenen Daten entsprechende neue Kontrollsumme berechnet wird, woraufhin die berechnete Kontrollsumme mit der im Speicher modul gespeicherten Kontrollsumme verglichen und bei Nichtübereinstimmung der beiden Kontrollsummen eine Fehlermeldung erzeugt wird.

2. Verfahren nach Anspruch 1, **dadurch gekennzeichnet, daß** als Sensoren Scanner verwendet werden.

3. Verfahren nach Anspruch 1 oder 2, **dadurch gekennzeichnet, daß** der Speichermodul von außen den Sensoren entnommen bzw. in diese eingesetzt wird.

4. Verfahren nach einem der Ansprüche 1 bis 3, **dadurch gekennzeichnet, daß** der zu konfigurierende Sensor nach seinem Einschalten die im Speicher modul gespeicherten Daten automatisch liest.

5. Verfahren nach einem der Ansprüche 1 bis 4, **dadurch gekennzeichnet, daß** der Sensor die in diesem gespeicherte Kontrollsumme mit der berechneten Kontrollsumme automatisch beim Lesen der im Speichermodul gespeicherten Daten vergleicht.

6. Verfahren nach einem der Ansprüche 1 bis 5, **dadurch gekennzeichnet, daß** die Sensoren als Empfänger für optische Strahlung von Geräten verwendet werden, die die An- oder Abwesenheit eines Objektes in einem zu überwachenden Raumbereich feststellen.

## Claims

1. A sensor configuration method, whereby the configuration data which contain an existing sensor configuration are transmitted by an output sensor to a sensor to be configured, **characterised in that** the output sensor in its configured state is connected to a memory module which stores the current configuration data of the output sensor and a check sum appropriate to the configuration data, the memory module is subsequently connected to the sensor to be configured, the data, that is the configuration data and the check sum stored in the memory module, are read into the sensor to be configured and a new check sum corresponding to the read-in data is calculated, whereupon the calculated check sum is compared with the check sum stored in the memory module and a fault message is generated if the two check sums fail to match.

2. A method according to claim 1, **characterised in that** scanners are used as sensors.

3. A method according to claim 1 or 2, **characterised in that** the memory module is removed from the sensors from outside or inserted into them.

4. A method according to one of the claims 1 to 3, **characterised in that** the sensor which is to be configured reads the data stored in the memory module automatically after it is switched on.

5. A method according to one of the claims 1 to 4, **characterised in that** the sensor compares the check sum stored in it with the calculated check sum automatically when reading the data stored in the memory module.

6. A method according to one of the claims 1 to 5, **characterised in that** the sensors are used as receivers of optical radiation from units which detect the presence or absence of an object within a space which is to be monitored.

## Revendications

1. Dispositif pour configurer des capteurs, où les données de configuration qui contiennent la configuration existante d'un capteur sont déplacées d'un capteur de sortie vers un capteur à configurer, **caractérisé en ce que** le capteur de sortie est relié en l'état configuré à un module d'enregistrement qui enregistre dans le module d'enregistrement les données effectives de configuration du capteur de sortie ainsi qu'un total de contrôle correspondant aux données de configuration, le module d'enregistrement est relié ensuite au capteur à configurer, les données, c'est-à-dire les données d'enregistrement ainsi que le total de contrôle, sont enregistrés dans le module d'enregistrement et un nouveau total de contrôle correspondant aux données enregistrées est calculé, après quoi le total de contrôle calculé est comparé au total de contrôle enregistré dans le module d'enregistrement et si les deux totaux de contrôle ne coïncident pas, un message d'erreur est généré.

2. Dispositif selon la revendication 1, **caractérisé en ce que** des scanners sont utilisés comme capteurs.

3. Dispositif selon la revendication 1 ou 2, **caractérisé en ce que** le module d'enregistrement est situé hors des capteurs ou selon le cas dans ceux-ci.

4. Dispositif selon l'une des revendications 1 à 3, **caractérisé en ce que** le capteur à configurer, après avoir été mis sous tension, lit automatiquement les données enregistrées dans le module d'enregistrement.

5. Dispositif selon l'une des revendications 1 à 4, **caractérisé en ce que** le capteur, en lisant les données enregistrées dans le module d'enregistrement, compare automatiquement le total de contrôle qui y est enregistré au total de contrôle calculé.

6. Dispositif selon l'une des revendications 1 à 5, **caractérisé en ce que** les capteurs sont utilisés comme récepteurs de rayonnement optique d'instruments qui déterminent la présence ou l'absence d'un objet dans un espace à surveiller.
